# EUROPEAN PATENT APPLICATION

(11) **EP 4 641 919 A1**
(43) Date of publication of application: **29.10.2025**
(21) Application number: 22969139.9
(22) Date of filing: 20.12.2022
(51) Int. Cl.: H02P 27/06, H02P 25/22

(54) **ELECTRONIC CONTROL DEVICE AND ELECTRIC POWER STEERING DEVICE**

(71) Applicant: Mitsubishi Electric Mobility Corporation, Tokyo 100-8310 (JP)
(72) Inventor: NAGARE Toshiki, Tokyo 100-8310 (JP); NAGAO Takashi, Tokyo 100-8310 (JP)
(74) Representative: Hoffmann Eitle
(86) International application number: PCT/JP2022/046814
(87) International publication number: WO 2024/134750

(57) **Abstract**

An electric control device according to the present disclosure includes a motor having a rotor and a pair of windings, and a control unit that controls current that is supplied to each of the pair of windings. The control unit has a control board, a first inverter circuit and a second inverter circuit, a first pre-driver, a second pre-driver, and a CPU. The first pre-driver is disposed on a first surface of the control board, the second pre-driver is disposed on a second surface of the control board.

## Description

### Technical Field

The present embodiment relates to an electronic control device and an electric power steering device.

### Background Art

Patent Document 1 discloses control device to control a motor. Said control device includes a first pre-driver and a second pre-driver. Each of the first pre-driver and the second pre-driver control a current that is supplied to a motor that includes coils of two systems (first winding group and second winding group). Accordingly, it is possible to insure system redundancy. In Patent Document 1, the first pre-driver and the second pre-driver or the like are symmetrically disposed on the control board. Such disposition allows for an impedance to the first pre-driver from a microcomputer, and an impedance to the second pre-driver from the microcomputer to easily be equal.

### Citation List

### Patent Documents

Patent Document 1: Japanese Unexamined Patent Application, First Publication No. 2012-143037

### Summary of Invention

### Problem to be Solved by the Invention

In FIG. 9 of Patent Document 1, the first pre-driver and the second pre-driver are both provided on the same surface on the control board. With such a disposition, it is easy for the first pre-driver and the second pre-driver to be affected by disturbances at the same time. Therefore, there is room for improvement from a view point of robustness against disturbance.

The present invention is made with the aforementioned problem in mind, and an object thereof is to provide an electric control device and an electric power steering device that has improved robustness against disturbance.

### Means to Solve the Problem

An embodiment of an electric control device according to the present disclosure includes a motor having a single rotor and two pair of windings which cause the rotor to rotate by having current flow thereto, and a control unit that is attached to the motor and that controls current being supplied to each of the pair of windings. The control unit has a control board, a first inverter circuit and a second inverter circuit which are able to independently supply current to each of the pair of windings, a first pre-driver which outputs a signal for operating the first inverter circuit, a second pre-driver which outputs a signal for operating the second inverter circuit, and a CPU which controls the first pre-driver and the second pre-driver. The first pre-driver is disposed on a first surface of the control board, and the second pre-driver is disposed on the second surface of the control board.

An embodiment of an electric power steering device according to the present disclosure includes the electric control device mentioned above.

### Effects of the Invention

According to the present disclosure, it is possible to provide an electric control device and an electric power steering device that have improved robustness against disturbance.

### Brief Description of Drawings

[FIG. 1] A view that shows a circuit diagram of an electric control device according to a first embodiment.
[FIG. 2] A view that shows a cross-section of a configuration of the electric control device, according to the first embodiment.
[FIG. 3] A view that shows configuration components that are implemented to a second surface of a control board according to the first embodiment, and is a plan view seen from a cover side in an axial direction.
[FIG. 4] A view that shows configuration components that are implemented on a first surface of the control board according to the first embodiment, and is a plan view that is projected on the cover side in the axial direction.
[FIG. 5] A plan view that overlays and shows a portion of the configuration components shown in FIG. 3 and FIG. 4.
[FIG. 6] A plan view that shows a first power line and a second power line of the second surface of the control board according to the first embodiment, as seen from a cover side in the axial direction.
[FIG. 7] A plan view that shows the first power line and the second power line on an inside of the control board, according to the first embodiment.
[FIG. 8] A plan view that overlays and shows configuration components of a first surface and a second surface according to a second embodiment, from a cover side in an axial direction.

### Description of Embodiments

Hereinafter, embodiments of the present disclosure are explained with reference to the drawings. Furthermore, the scope of the present disclosure is not limited to the embodiments mentioned hereinafter, and changes are possible so long as the changes are within the technical scope of the present disclosure.

### First Embodiment

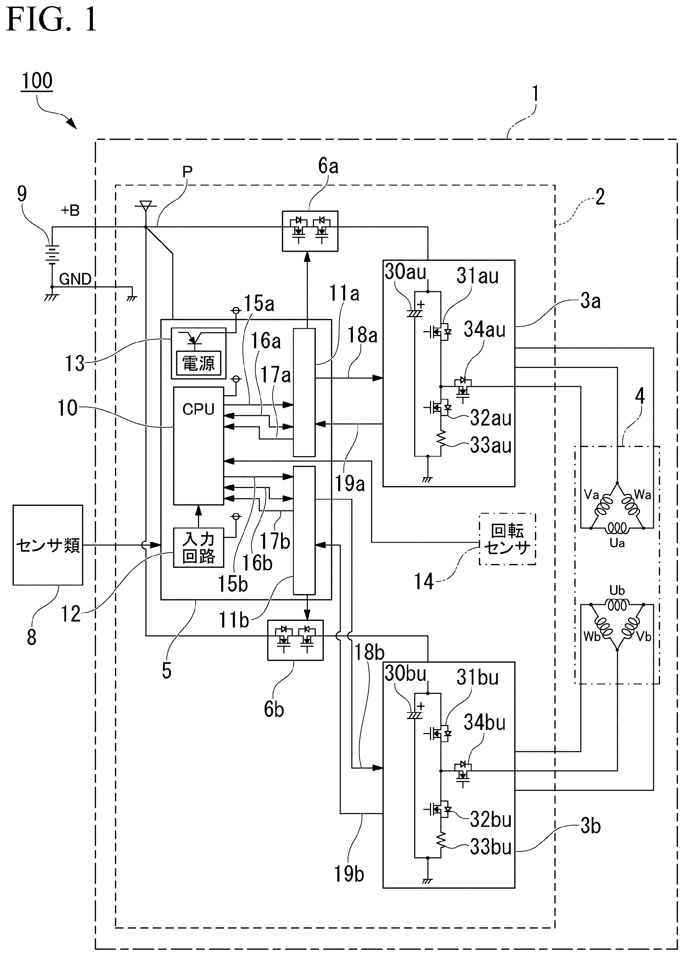

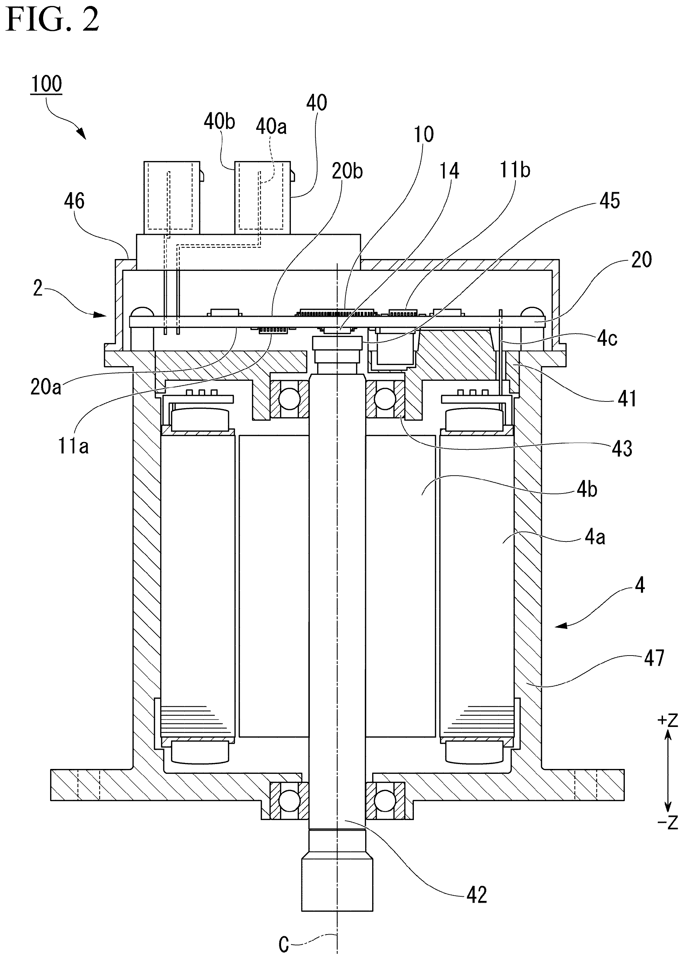

FIG. 1 is a view that shows a circuit diagram of an electric control device 1 and an electric power steering device 100 according to a first embodiment. FIG. 2 is a view that shows a cross-section of the electric control device 1. As shown in FIG. 1, the electric control device 1 has a control unit 2 and a motor 4. The control unit 2 has first inverter circuit 3a, a second inverter circuit 3b, a control circuit 5, a first power switching element 6a, a second power switching element 6b, and a rotational sensor 14 or the like.

As shown in FIG. 2, the control unit 2 has a control board 20. The first inverter circuit 3a, the second inverter circuit 3b, the control circuit 5, the first power switching element 6a, the second power switching element 6b, the rotational sensor 14 and the like are implemented on the control board 20. The electric power steering device 100 is configured to use torque that is generated by the motor 4 as steering assist torque of a vehicle. Although detailed explanations are omitted, a rotation shaft 42 of the motor 4 is connected to vehicle steering, via a reduction gear or the like.

As shown in FIG. 2, the motor 4 includes a stator 4a and a rotor 4b. The stator 4a has a pair of three phase windings (three phase coil). The three phases are a U phase, a V phase, and a W phase. In FIG. 1, a first three phase winding is shown with reference signs Ua, Va and Wa, and a second three phase winding is shown with reference sings Ub, Vb, and Wb. The windings Ua, Va, and Wa are delta connected. Hereinafter, there are cases where the pair of three phase windings are simply referred to as "three phase windings Ua to Wb". Although the three phase windings Ua to Wb in FIG. 1 are delta connected, the three phase windings Ua to Wb may be star connected.

As shown in FIG. 2, the motor 4 includes a cover 46, a frame 47, and a terminal group 4c or the like. The rotor 4b has the rotation shaft 42. The rotation shaft 42 rotates about the stator 4a, with a motor axis C as a center thereof. The control board 20 is covered by the cover 46. The frame 47 is a cylinder, and the three phase windings Ua to Wb of the stator 4a or the like are housed on an inside of the frame 47. The control board 20 has a first surface 20a and a second surface 20b.

### (Definition of Directions)

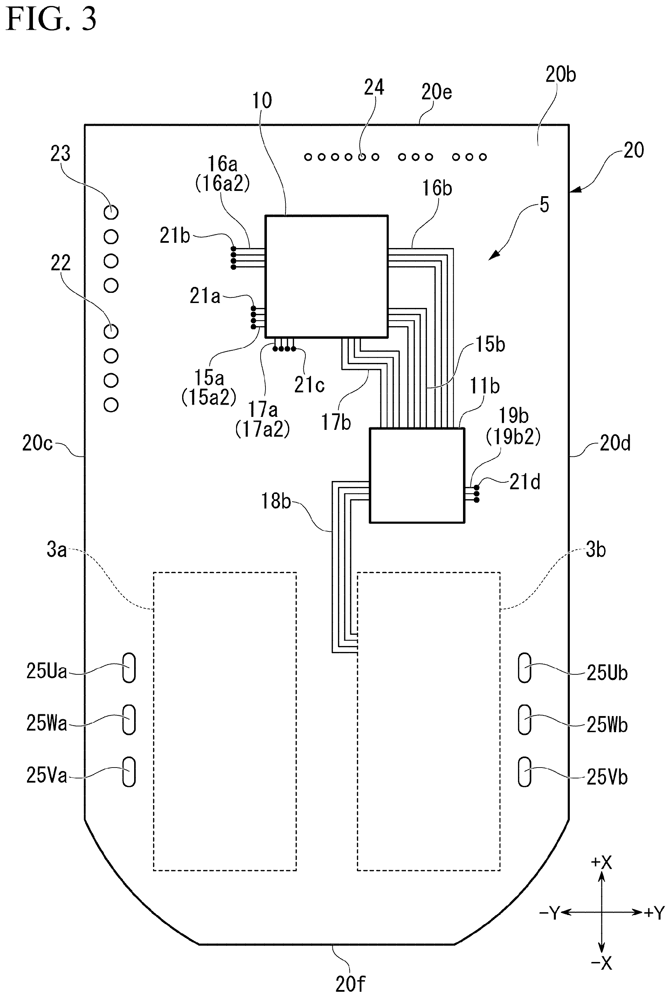

In the present specification, a direction along the motor axis C direction is an "axial direction Z". The axial direction Z coincides with a thickness direction of the control board 20. As shown in FIG. 2, the control board 20 and the rotor 4b are disposed so as to align in the axial direction Z. In the axial direction Z, a side (+Z side) in which the control board 20 is disposed in is referred to as "above", and a side (-Z side) in which the rotor 4b is disposed is referred to as "below". The control board 20 extends so as to intersect (semi-orthogonal) with the axial direction Z. The first surface 20a is a surface that faces below, and the second surface 20b is a surface that faces above on the control board 20. In other words, the first surface 20a is a surface that faces the rotor 4b side, and the second surface 20b is a surface that faces the cover 46 side. "As seen from the axial direction Z" refers to a plan view. A view seen from the axial direction Z refers to a "plan view". The axial direction Z need not align with the vertical direction. A direction that intersects the axial direction Z is referred to as a "first orthogonal direction X" (refer to FIG. 3 or the like). A direction that is orthogonal to both the axial direction Z and the first orthogonal direction X is referred to as a "second orthogonal direction Y" (refer to FIG. 3 or the like).

FIG. 3 is a view that shows configuration components that are implemented to the second surface 20b of the control board 20, and is a plan view seen from the cover 46 side in the axial direction Z. As shown in FIG. 3, the control board 20 is a semi-rectangle in the plan view, and has a first side edge 20c, a second side edge 20d, a third side edge 20e, and a fourth side edge 20f. The first side edge 20c and the second side edge 20d are parallel in the first orthogonal direction X. The third side edge 20e and the fourth side edge 20f are parallel in the second orthogonal direction Y. In the first orthogonal direction X, a side closer to the third side edge 20e is referred to as a "+X side", and a side closer to the fourth side edge 20f is referred to as a "-X side". In the second orthogonal direction Y, a side closer to the second side edge 20d is referred to as a "+Y side", and a side closer to the first side edge 20c is referred to as a "-Y side".

As the motor 4 for example, a brushless DC motor may be adopted. The motor 4 according to the present embodiment is a three phase brushless-motor, and includes three phase windings Ua to Wb (refer to FIG. 1). As shown in FIG. 2, a housing 41 to prevent contaminants from making it to an inside of the motor 4 is provided on top of the motor 4. The housing 41 is fitted to an inside on a top edge end on the cylindrical frame 47. A through hole is formed on a center of the housing 41, and a bearing 43 is fixed to an inside of said through hole. The rotation shaft 42 is inserted through the bearing 43. The bearing 43 holds the rotation shaft 42 so that the rotation shaft 42 is able to smoothly rotate. A sensor magnet 45 is attached on a tip of the rotation shaft 42. The sensor magnet 45 has one or more of an N pole, and an S pole each.

As shown in FIG. 2, the control board 20 is disposed above the housing 41. The stator 4a (the three phase windings Ua to Wb) is disposed below the housing 41. The terminal group 4c is electrically connected to the control board 20, and the three phase windings Ua, Va, Wa, Ub, Vb, and Wb. Specifically, the housing 41 has a through hole that extends in the axial direction Z. The terminal group 4c is inserted through the through hole of the housing 41. The terminal group 4c includes six terminal that correspond to the each of the three phase windings Ua to Wb.

As shown in FIG. 3, six current supply holes 25Ua, 25Va, 25Wa, 25Ub, 25Vb, and 25Wb are formed on the control board 20. Each of the six terminals included in the terminal group 4c are inserted into said six current supply holes 25Ua, 25Va, 25Wa, 25Ub, 25Vb, and 25Wb. Current is supplied from the inverter circuits 3a and 3b of the control board 20 to the three phase windings Ua to Wb, via the current supply holes 25Ua, 25Va, 25Wa, 25Ub, 25Vb, 25Wb, and the terminal group 4c. Accordingly, the rotation shaft 42 rotates. Hereinafter, there are cases where the six current supply holes 25Ua, 25Va, 25Wa, 25Ub, 25Vb, and 25Wb are referred to as the "current supply holes 25Ua to 25Wb". The six terminals that are included in the terminal group 4c may be ends of the three phase windings Ua to Wb, or may be intermediate parts that are electrically connected to the ends of the three phase windings Ua to Wb. For example, the six terminals that are included in the terminal group 4c may be connected to the current supply holes 25Ua to 25Wb by soldering.

As shown in FIG. 2, a connector assembly 40 is disposed above the cover 46. A harness that is not shown on the drawings is connected to the connector assembly 40. The harness inputs information used when the electric control device 1 controls the motor 4, to the control unit 2. More specifically, sensors 8 and battery 9 or the like, which are mounted on a vehicle, are electrically connected to the connector assembly 40 via the harness. The sensors 8 for example, include a vehicle speed sensor, a torque sensor to detect steering torque of a steering wheel, and so on. The connector assembly 40 electrically connects the sensors 8 and the battery 9 as a bundle to the control unit 2. Added to this, the connector assembly 40 may also electrically connect a battery voltage line, a ground line, and a vehicle signal transmission signal or the like as a bundle to the control unit 2. Or, a connector for connection, separate from the connector assembly 40, may be provided for connection of the battery voltage line, and the ground line or the like.

The connector assembly 40 has a plurality of signal wires 40a, resin housings 40b that surround ends of each of the signal wires 40a. A bottom end of each of the signal wires 40a is inserted through a plurality of GND22, a plurality of power line holes 23, and a plurality of sensor holes 24 that are formed on the control board 20 (refer to FIG. 3). Each of the signal wires 40a is electrically connected to a circuit pattern that is formed on the control board 20.

The rotational sensor 14 detects a rotation angle of the rotation shaft 42. As the rotational sensor 14, an MR (magnetoresistance: Magnetoresistance) sensor may be used. By having the rotational sensor 14 detect a magnetic field that is generated by a sensor magnet 45, the rotational sensor 14 detects the rotation angle of the rotation shaft 42. The rotational sensor 14 is disposed so as to face the sensor magnet 45. More specifically, as shown in FIG. 2, the rotational sensor 14 is implemented on the first surface 20a of the control board 20. The rotational sensor 14 is disposed in a location that overlaps with the sensor magnet 45, when seen from the plan view. By being disposed in such manner, it is possible to increase accuracy of the rotation angle of the rotational sensor 14, and to improve controllability of the motor 4 using the electric control device 1. If a required detection accuracy is obtained, the rotational sensor 14 may be disposed on the second surface 20b of the control board 20. Or, the rotational sensor 14 may be disposed in a location that is off with respect to the sensor magnet 45, when seen from the plan view.

As shown in FIG. 1, the first inverter circuit 3a corresponds to first three phase windings Ua, Va, Wa, and the second inverter circuit 3b corresponds to second three phase windings Ub, Vb, and Wb. The control unit 2 is configured so as to supply electrical power independently to the pair of three phase windings Ua to Wb by controlling the two inverter circuits 3a and 3b. The first power switching element 6a and the second power switching element 6b have a relay function. Specifically, the first power switching element 6a switches between supply and cut off of electrical power to the first inverter circuit 3a. The second power switching element 6b switches between supply and cut off of electrical power to the second inverter circuit 3b.

Electrical power that is input from the electric control device 1 from the battery 9 is diverged and is supplied to the first power switching element 6a, the second power switching element 6b, and the control circuit 5. The diversion point P shown in FIG. 1 shows a location where the electrical power that is supplied from the battery 9 is input and diverged.

The control circuit 5 includes a CPU 10, a first pre-driver 11a, a second pre-driver 11b, an input circuit 12, and a power circuit 13 or the like. The power circuit 13 uses electrical power supplied from the battery 9 to generate power supply voltage for normal operation of the various electronic components (the CPU 10, the input circuit 12, the first pre-driver 11a, the second pre-driver 11b, and the rotational sensor 14) that configure the control unit 2. The input circuit 12 inputs various information that the control unit 2 receives from the sensors 8 and the rotational sensor 14 or the like to the CPU 10. The CPU 10 is configured so as to calculate various control amounts of the motor 4 to conduct control. The first pre-driver 11a and the second pre-driver 11b drive the first inverter circuit 3a and the second inverter circuit 3b based on calculation results of the CPU 10.

A plurality of wires that connect the CPU 10 and the pre-drivers 11a and 11b are formed in the control board 20. For example as shown in FIG. 1, a first drive instruction signal wire 15a, a second drive instruction signal wire 15b, a first transmission signal wire 16a, a second transmission signal wire 16b, a first detection signal 17a and a second detection signal 17b or the like that are formed in the control board 20. The first drive instruction signal wire 15a and the second drive instruction signal wire 15b transmit PWM signals towards the first pre-driver 11a and the second pre-driver 11b. A PWM signal is a signal that the first pre-driver 11a and the second pre-driver 11b use to drive the inverter circuits 3a and 3b. The first transmission signal wire 16a and the second transmission signal wire 16b are used for data transmission between the CPU 10 and the pre-drivers 11a and 11b. The first detection signal 17a and the second detection signal 17b are used to transmit monitor signals. The monitor signals are signals used to show sizes of drive currents of the inverter circuits 3a and 3b detected by the pre-drivers 11a and 11b.

Next, the operations of the various components of the control unit 2 are explained.

The power circuit 13 supplies regulated voltage to the CPU 10, the input circuit 12, the first pre-driver 11a, the second pre-driver 11b, the rotational sensor 14 and the like, using electrical power from the battery 9. Electrical power of the battery 9 is also supplied to the inverter circuits 3a and 3b via the power switching elements 6a and 6b.

Information from the sensors 8 is sent to the CPU 10 via the input circuit 12. The CPU 10 calculates the amount of control for supply of electrical power to the motor 4, based on said information. Instructions (for example, PWM signal and so on) based on the calculation results are transmitted from the CPU 10 to the pre-drivers 11a and 11b. The pre-drivers 11a and 11b output signals to drive the inverter circuits 3a and 3b, based on instructions from the CPU 10. The pre-drivers 11a and 11b detect voltages and currents of each component inside the inverter circuits 3a and 3b. Said detection results for example, are transmitted to the CPU 10 via the input circuit 12 or the like. When conducting what is known as sensor-less control, the inverter circuits 3a and 3b need not detect voltages or currents of components on an inside thereof.

The power switching elements 6a and 6b include two MOSFETs for example. In such case, the two MOSFETs may be connected in series so that each parasitic diode of the two MOSFETs is connected in a forward direction and a reverse direction. Connected in a forward direction means a direction from the battery 9 towards the inverter circuits 3a and 3b. Reverse direction means a direction that is opposite of the forward direction. As such, by connecting the two MOSFETs as mentioned above, it is possible for each of the power switching elements 6a and 6b to have both a switching function and a protective function. A switching function refers to a function of supplying and cutting off electrical power to the inverter circuits 3a and 3b. A protection function refers to a function of protecting the inverter circuits 3a and 3b, when the battery 9 mounted on the vehicle has a voltage (+B) and a GND of the battery 9 are connected in a reverse order. However, the power switching elements 6a and 6b need not have both a switching function and a protection function. A configuration of the power switching elements 6a and 6b may be changed.

It is possible to forcefully cut off electrical power supply in a case where failure occurs in the inverter circuits 3a and 3b or in the motor 4, using the power switching elements 6a and 6b. The CPU 10 controls operation of the power switching elements 6a and 6b via the pre-drivers 11a and 11b. However, operation of the power switching elements 6a and 6b may be controlled by an independent circuit of the CPU 10 and the pre-driver 11a.

The inverter circuits 3a and 3b supply electrical power to the three phase windings Ua to Wb of the motor 4 based on the calculation results of the CPU 10. Each of the inverter circuits 3a and 3b has three upper arms and three lower arms that correspond to each of the U, V, and W phases. The first inverter circuit 3a and the second inverter circuit 3b have the same circuit structure. Furthermore, circuit structures relating to the U phase, the V phase, and the W phase in each of the inverter circuits 3a and 3b are the same. The below explanation relates to the U phase, and represents all three phases. In other words, the same explanations below apply to the V phase and the W phase. In FIG. 1, out of the configuration components of the inverter circuits 3a and 3b, configuration components that correspond to the U phase are shown. In reality though, the inverter circuits 3a and 3b have configuration components that correspond to the V phase and the W phase. In other words, in FIG. 1, the V phase and the W phase configuration components that each of the inverter circuits 3a and 3b have are omitted.

As shown in FIG. 1, the first inverter circuit 3a has a smoothing capacitor 30au, an upper arm switching element 31au, a lower arm switching element 32au, a shunt resistor 33au, and a relay switching element 34au. Arm switching element 31au is disposed on the top arm, and arm switching element 32au is disposed on the lower arm. Said two arm switching elements 31au and 32au are connected in series. The relay switching element 34au is connected between the two arm switching elements 31au and 32au. The relay switching element 34au has a function of a relay. In other words, the relay switching element 34au switches the electrical power supply headed towards the winding Ua of the motor 4 from ON to OFF, from a portion between the two arm switching elements 31au and 32au. The arm switching elements 31au and 32au are driven by the first pre-driver 11a based on calculation results of the CPU 10.

The smoothing capacitor 30au is connected near the arm switching elements 31au and 32au. The smoothing capacitor 30au has a function of suppressing power and voltage variations and noise during switching. The shunt resistor 33au is directly connected between the arm switching element 32au and the GND. The shunt resistor 33au is used to detect driving current that flows in the winding Ua of the motor 4.

Voltage, or a voltage of a terminal of the winding Ua of the motor 4, between the two arm switching elements 31au and 32au is transmitted to the CPU 10. Voltages of both ends of the shunt resistor 33au are also transmitted to the CPU 10 via a shunt voltage wire 19a to be mentioned later on, and the first pre-driver 11a. Based on the transmitted values, the CPU 10 compares a control instruction (target value) and an actual current or voltage. Based on said comparison results, the CPU 10 executes feedback control to suitably cause the motor 4 to rotate. CPU 10 utilizes detection results using the rotational sensor 14 of the rotation angle when conducting calculations. In other words, the CPU 10 calculates the rotational position or the rotational speed of the rotation shaft 42, and uses the aforementioned in calculations. The CPU 10 further conducts failure determination of each part.

The second inverter circuit 3b also has the same circuit configuration as the first inverter circuit 3a. In other words, the second inverter circuit 3b has a smoothing capacitor 30bu, an upper arm switching element 31bu, a lower arm switching element 32bu, a shunt resistor 33bu, and a relay switching element 34bu. Each component of the second inverter circuit 3b has the same connection relationship and function as the first inverter circuit 3a, and explanations thereof are omitted. There are cases where configuration components that are common among the phases of the two inverter circuits 3a and 3b (U phase, V phase, and W phase) are comprehensively represented, in the explanations below. For example, the "upper arm switching elements 31" comprehensively represents the six (the two inverter circuits 3a and 3b, and the three phases) upper arm switching elements which the control unit 2 has. Similarly, the "smoothing capacitors 30", the "lower arm switching elements 32", the "shunt resistors 33", and the "relay switching elements 34" are also comprehensively represented.

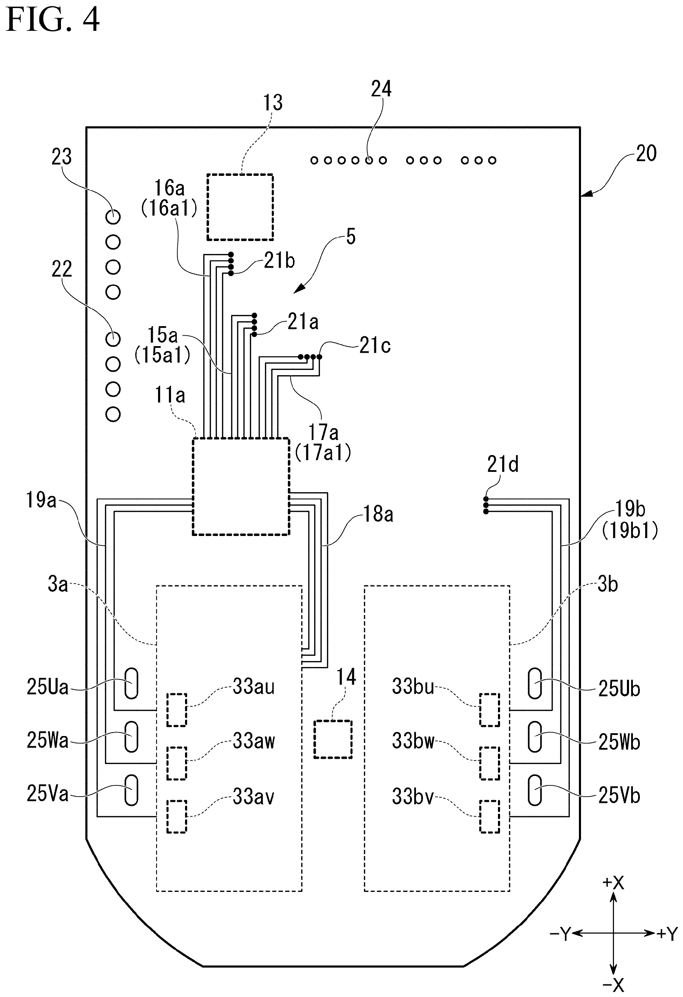

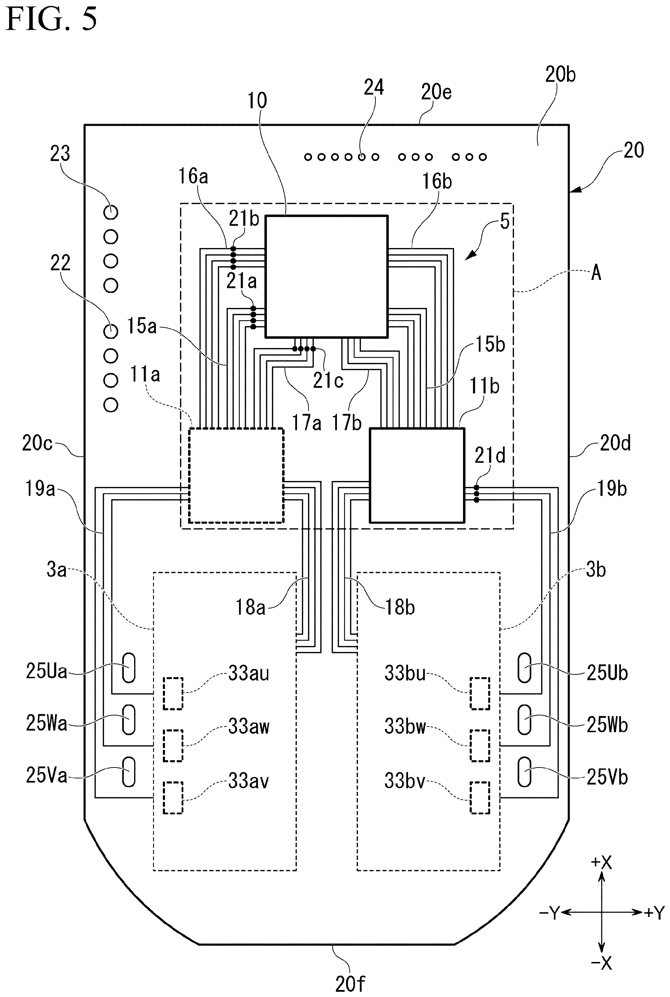

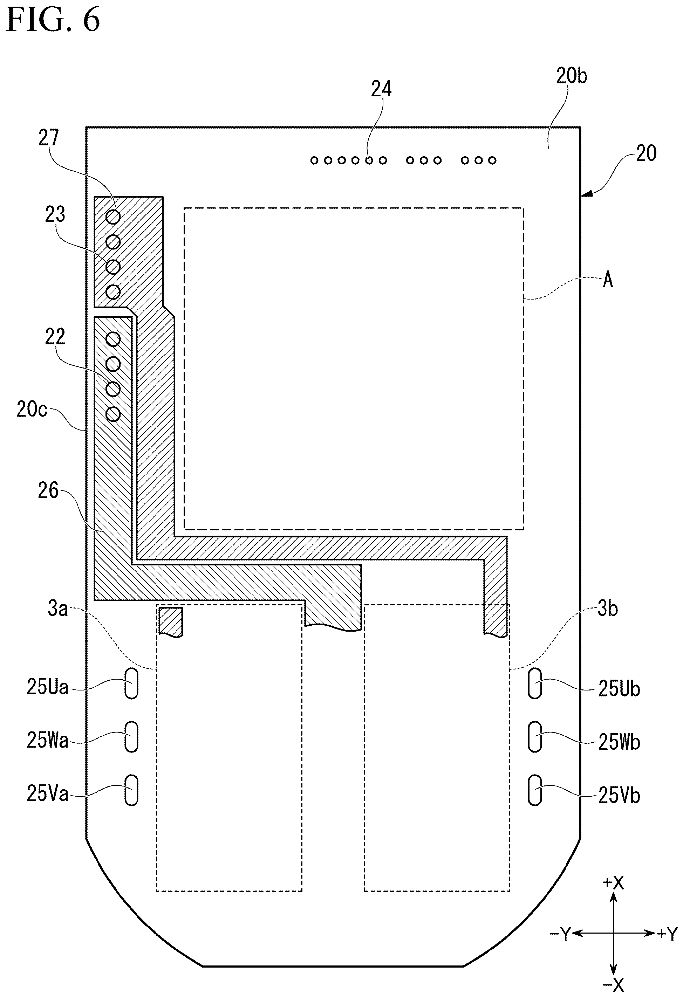

Next, disposition of the various configuration components included in the electric control device 1 are explained using FIG. 3 to FIG. 6. FIG. 4 is a view that shows configuration components that are implemented on the first surface 20a of the control board 20, and is a plan view that is projected on the cover side in the axial direction. FIG. 5 is a plan view that overlays and shows a portion of the configuration components shown in FIG. 3 and FIG. 4. FIG. 6 is a plan view that shows dispositions of a first power line 26 and a second power line 27 to be mentioned later on.

The control board 20 is a multiphase circuit board having a construction of a stacked plurality of conductor layers and a plurality of insulative layers. In the present embodiment, a glass-epoxy resin is used as an insulative layer. In the present embodiment, the control board 20 has six conductor layers. Out of the six conductor layers, the conductor layer located at the very bottom (the first surface 20a side) is referred to as the "first layer". Out of the six conductor layers, the conductor layer located at the very top (the second surface 20b side) is referred to as the "sixth layer". However, a quantity and material of layers that configure the control board 20 may be changed.

In FIG. 4, the first pre-driver 11a, the power circuit 13, and the rotational sensor 14 are shown using dashed lines. This is because the first pre-driver 11a, the power circuit 13, and the rotational sensor 14 are implemented on the first surface 20a. In other words, FIG. 4 is a view that projects a portion of the configuration elements on the first surface 20a from above (from the second surface 20b side). The portion of configuration components that are visible as such are displayed using a dashed line.

The inverter circuits 3a and 3b handle large currents, in order to supply the three phase windings Ua to Wb of the motor 4. As such, noise that is generated from the inverter circuits 3a and 3b is emitted when switching of the large currents. Control signals that the control circuit 5 (the CPU 10, the pre-drivers 11a and 11b or the like) handles are easily affected by noise emitted from the inverter circuits 3a and 3b. As such, it is preferable to have the control circuit 5 and the inverter circuits 3a and 3b be separated from one another, in a case where both are implemented on the same control board 20. In the present embodiment, as shown in FIG. 5, the configuration components of the control circuit 5 are disposed on a region in the +X side on the control board 20, and the inverter circuits 3a and 3b are disposed on a region in the -X side on the control board 20. Accordingly, the space between the inverter circuits 3a and 3b, and the control circuit 5 becomes large, making it difficult for the control circuit 5 to be affected by noise.

Next, types of wires that the control board 20 has are explained using FIG. 5 to FIG. 7. As previously explained, the control unit 2 is electrically connected to the battery 9 and the sensors 8 via the connector assembly 40. As shown in FIG. 5, a plurality of GND holes 22, the plurality of power line holes 23, and the plurality of sensor holes 24 are formed on a region near a circumferential edge of the control board 20. Said GND holes 22, power line holes 23, sensor holes 24, and the connector assembly 40 have ends of the plurality of signal wires 40a inserted therethrough. More specifically, a negative pole of the battery 9 (GND) which is electrically connected to a signal wire of the signal wires 40a, is inserted through a hole of the GND hole 22. A positive pole of the battery 9 (+B) which is electrically connected to a signal wire of the signal wires 40a, is inserted through a hole of the power line holes 23. The signal wires 40a which are electrically connected to the sensors 8, are inserted through the sensor holes 24. Each of the signal wires 40a and the holes 22 to 24 may be connected to one another by means of being press-fitted to one another. Or each of the signal wires 40a and the holes 22 to 24 may be connected to one another by soldering.

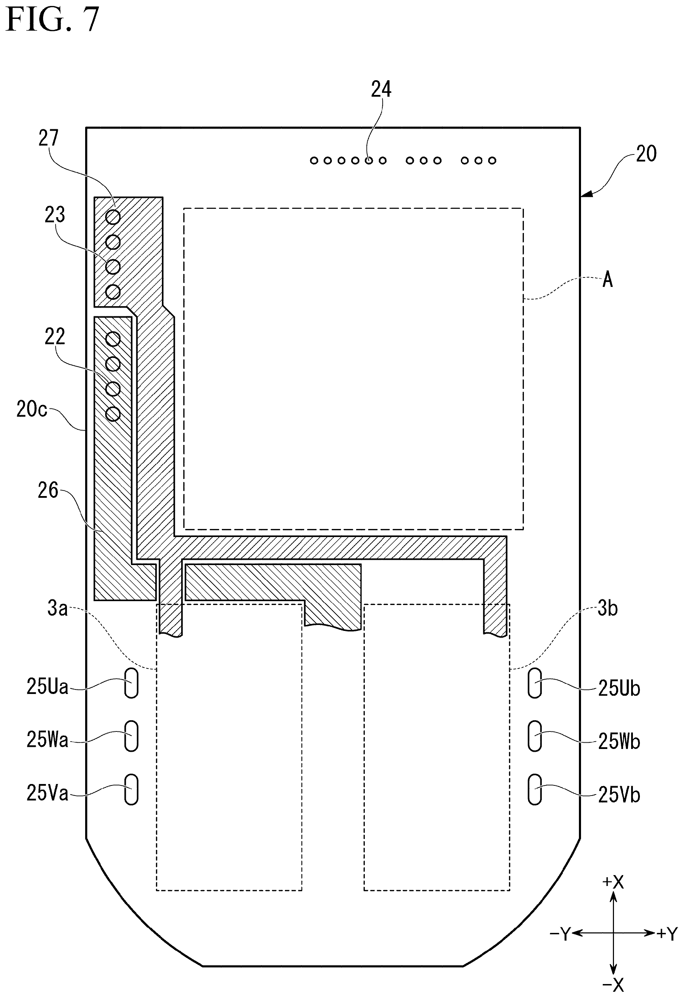

As shown in FIG. 6 and FIG. 7, the first power line 26 and the second power line 27 are formed on the control board 20. FIG. 6 is a plan view that shows locations of the first power line 26 and the second power line 27 of the second surface 20b of the control board 20. FIG. 7 is a plan view that shows the first power line 26 and the second power line 27 located on an inside of the control board. The first power line 26 is a wiring pattern that is connected to the plurality of GND holes 22, and is made to have the same potential as GND. The second power line 27 is a wiring pattern which is connected to the plurality of power line holes 23, and is made to have the same potential as the power line of the battery 9 (+B). The first power line 26 extends towards the inverter circuits 3a and 3b from the GND holes 22. The second power line 27 extends towards the inverter circuits 3a and 3b from the power line holes 23.

The first power line 26 and the second power line 27 transmit large currents to drive the motor 4. As such, it is preferable to make the first power line 26 and the second power line 27 (cross-sections thereof) larger. In the present embodiment, each of the six conductor layers which the control board 20 has are formed to almost have the same shape of the first power line 26 and the second power line 27. Furthermore, each first power line 26 which is formed on each of the six conductor layers is electrically connected using through vias (not shown on the drawings). Similarly, each second power line 27 which is formed on each of the six conductor layers is electrically connected using through vias (not shown on the drawings). From such construction, it is possible to enlarge cross-sectional areas of the first power line 26 and the second power line 27.

It is preferable to dispose the first power line 26 and the second power line 27 such as to avoid the region (region A shown in FIG. 5) in which the control circuit 5 is disposed. As shown in FIG. 6 and FIG. 7, portions of the first power line 26 and the second power line 27 are disposed so as to be parallel along the first side edge 20c of the control board 20. Accordingly, it is possible to widen an implementation surface of the control circuit 5.

In the present embodiment, electrical power of the battery 9 is supplied to each of the inverter circuits 3a and 3b. Accordingly, the first power line 26 branches out, with one of two branches being connected to the first inverter circuit 3a, and the other being connected to the second inverter circuit 3b. Similarly, the second power line 27 branches out, with one of two branches being connected to the first inverter circuit 3a, and the other being connected to the second inverter circuit 3b. As seen from the plan view, the first power line 26 and the second power line 27 are disposed so as to intersect one another. However, locations on the semiconductor of the portion in which the first power line 26 and the second power line 27 intersect differ from one another. As such, it is possible to preserve an insulative condition of the first power line 26 and the second power line 27.

Dispositions of the first power line 26 and the second power line 27 are explained in further detail. As shown in FIG. 6, it would seem that the second power line 27 and the first inverter circuit 3a are not connected at the second surface 20b of the control board 20. However, as shown in FIG. 7, the second power line 27 and the first inverter circuit 3a are connected at a conductor layer located on an inside of the control board 20. In FIG. 7, it would seem that the first power line 26 is broken up near the first inverter circuit 3a. However, as shown in FIG. 6, the first power line 26 extends from the GND holes 22 to the inverter circuits 3a and 3b, on the second surface 20b. Furthermore, the first power line 26 may be the same potential as the power line potential of the battery 9 (+B), and the second power line 27 may be the same potential as GND. In other words, in FIG. 6 and the like, locations of the GND holes 22 and the power line holes 23 may be interchanged.

The inverter circuit 3a and 3b control the ON and OFF of the upper arm switching elements 31 and the lower arm switching elements 32. As such, current is selectively supplied to the three phase windings Ua to Wb of the motor 4, going through the current supply holes 25Ua to 25Wb of the control board 20.

As shown in FIG. 4, the six shunt resistors 33au, aw, av, bu, bw, and bv are disposed at locations near the six current supply holes 25Ua to 25Wb. The six current supply holes 25Ua to 25Wb are disposed so as to have near point symmetry to one another, with the rotational sensor 14 as a center thereof. As such, it is possible to minimize the effect of the noise generated from the current supply holes 25Ua to 25Wb and corresponding wires, on the detection signal of the rotational sensor 14.

Next, dispositions of wires or the like included in the control circuit 5 are explained. As shown in FIG. 2, the first pre-driver 11a is implemented on the first surface 20a of the control board 20. The CPU 10 and the second pre-driver 11b are implemented on the second surface 20b of the control board 20. As shown in FIG. 3, a plurality of drive instruction signal wires 15b, a plurality of transmission signal wires 16b, and a plurality of detection signal wires 17b are disposed between the CPU 10 and the second pre-driver 11b. The transmission signal wires 16b and the drive instruction signal wires 15b are connected to a surface on the +Y side of the CPU 10. The detection signal wires 17b are connected to a surface on the -X side of the CPU 10. The drive instruction signal wires 15b, the transmission signal wires 16b, and the detection signal wires 17b are disposed so as not to intersect one another.

As shown in FIG. 4, a plurality of drive instruction signal wires 15a, a plurality of transmission signal wires 16a, and a plurality of detection signal wires 17a are connected to the first pre-driver 11a. As shown in FIG. 3 and FIG. 4, the drive instruction signal wires 15a have portions 15a1 located on top (i.e., the first layer) of the first surface 20a, and portions 15a2 located on top (i.e. the sixth layer) of the second surface 20b. Similarly, the transmission signal wires 16a have first portions 16a1 located on top of the first surface 20a, and portions 16a2 located on top of the second surface 20b. The detection signal wires 17a have portions 17a1 located on top of the first surface 20a, and portions 17a2 located on top of the second surface 20b.

As shown in FIG. 3, each of the portions 15a2, 16a2, and 17a2 that the drive instruction signal wires 15a, the transmission signal wires 16a, and the detection signal wires 17a have, and that are located on the second surface 20b, are connected to the CPU 10. A plurality of vias 21a, 21b, 21c and 21d that connect from the first layer to the sixth layer are formed on the control board 20. The two portions 15a1 and 15a2 of the drive instruction signal wires 15a are connected using the via 21a. The two portion 16a1 and 16a2 of the transmission signal wires 16a are connected using the via 21b. The two portions 17a1 and 17a2 of the detection signal wires 17a are connected using the via 21c. Therefore, the drive instruction signal wires 15a, the transmission signal wires 16a, and the detection signal wires 17a electrically connect the first pre-driver 11a and the CPU 10 (also refer to FIG. 5).

As shown in FIG. 5, the transmission signal wires 16a and the drive instruction signal wires 15a are connected to a side surface on the -Y side of the CPU 10. The detection signal wires 17a are connected to a side surface on the -X side of the CPU 10. The drive instruction signal wires 15a, the transmission signal wires 16a, and the detection signal wires 17a are disposed so as not to intersect with one another. Each of the wires 15a, 15b, 16a, 16b, 17a, and 17b is formed on a layer (from the first layer to the sixth layer) out of layers of the six conductor layers that the control board 20 has.

As shown in FIG. 5, a plurality of first driving voltage wires 18a and a plurality of first shunt voltage wires 19a are disposed between the first pre-driver 11a and the first inverter circuit 3a. A plurality of second driving voltage wires 18b and a plurality of second shunt voltage wires 19b are disposed between the second pre-driver 11b and the second inverter circuit 3b. The first driving voltage wires 18a and 18b transmit drive voltages so as to drive the inverter circuits 3a and 3b. The first shunt voltage wires 19a and 19b transmit voltages of both ends of the shunt resistors 33au, aw, av, bu, bw, and bv. Said voltages of both ends are used to monitor a size of a drive currents transmitted to the motor 4.

The second shunt voltage wire 19b has a portion 19b1 that is located on the first surface 20a (refer to FIG. 4), and a portion 19b2 that is located on the second surface 20b (refer to FIG. 3). The second shunt voltage wire 19b has two portions 19b1 and 19b2 that are connected to one another using the via 21d.

Having the first shunt voltage wires 19a and 19b, which are used to detect current, be affected by noise is correlated to a decrease in control accuracy of the motor 4. Since the inverter circuits 3a and 3b handle large currents as well, it is easy to have switching noises be generated. Here, the shunt voltage wires 19a and 19b are disposed on the control board 20, in the second orthogonal direction Y. More specifically, as shown in FIG. 5, a portion of the shunt voltage wire 19a is disposed near the first side edge 20c, and a portion of the shunt voltage wire 19b is disposed near the second side edge 20d. Accordingly, it is possible to reduce the effect switching noise has on current detection.

The driving voltage wires 18a and 18b generate noise easily. The driving voltage wires 18a and 18b are disposed in a center of the control board 20 in the second orthogonal direction Y. More specifically, a portion of the driving voltage wires 18a and 18b is disposed between the inverter circuits 3a and 3b. With such disposition, it is possible to make a distance between the driving voltage wires 18a and 18b and the shunt voltage wires 19a and 19b larger, therefore reduce the effect that noise has on current detection.

Here, including the two pre-drivers 11a and 11b which are capable of individually operating the motor 4, gives redundancy to the electric control device 1. In other words, even if a failure occurs at one of the two pre-drivers 11a and 11b, the other would still be able to continue operating the motor 4. However, assuming a case where the two pre-drivers 11a and 11b are disposed on the same surface of the control board 20, chances of having both the pre-drivers 11a and 11b be affected by disturbances at the same time becomes higher. As types of disturbances, water infiltrating to an inside of the electric control device 1, noise from an outside of the electric control device 1, and so on may be mentioned for example. Due to the effects of such disturbances, failures of the pre-drivers 11a and 11b may occur at the same time, causing the motor 4 to lose functional operability, which renders the aforementioned redundancy as moot.

With respect to the above, in the present disclosure, the two pre-drivers 11a and 11b are divided among both surfaces of the control board 20. As such, it is possible to suppress having a disturbance affect both the pre-drivers 11a and 11b at the same time. Therefore, even if a failure occurs to one pre-driver due to a disturbance, it is unlikely that an error would occur to the remaining one pre-driver. In other words, it is possible for the motor 4 to continue operating using the remaining one pre-driver.

As mentioned above, the electric control device 1 according to the present disclosure includes a motor 4 having a single rotor 4b and two pairs of windings Ua to Wb which cause the rotor 4b to rotate by having the current flow thereto, and a control unit 2 that is attached to the motor 4 and that controls the current being supplied to each of the pair of windings Ua to Wb. The control unit 2 has the control board 20, the first inverter circuit 3a and the second inverter circuit 3b which are able to independently supply current to each of the pair of windings Ua to Wb, the first pre-driver 11a which outputs a signal for operating the first inverter circuit 3a, the second pre-driver 11b which outputs a signal for operating the second inverter circuit 3b, and the CPU 10 which controls the first pre-driver 11a and the second pre-driver 11b. The first pre-driver 11a is disposed on the first surface 20a of the control board 20, and the second pre-driver 11b is disposed on the second surface 20b of the control board 20. With the above configuration, it is possible to provide the electric control device 1 having increased robustness against disturbances.

In the present embodiment, the wires 15a, 16a, and 17a which connect the CPU 10 and the first pre-driver 11a, and the wires 15b, 16b, and 17b which connect the CPU 10 and the second pre-driver 11b are disposed so as to project in the thickness direction of the control board 20 without intersecting one another (refer to FIG. 5). As such, it is possible to reduce effects of cross-talk between each of the wires, and it is possible to increase signal quality.

The control board 20 has the first side edge 20c and the second side edge 20d, the first inverter circuit 3a has the first shunt resistors 33au, 33aw, and 33av to monitor current being supplied to the motor 4, and the second inverter circuit 3b has the second shunt resistors 33bu, 33bw, and 33bv to monitor current being supplied to the motor 4. The first shunt voltage wire 19a that transmits voltages of both ends of the first shunt resistors 33au, 33aw, and 33av to the first pre-driver 11a, and the second shunt voltage wire 19b which transmits voltages of both ends of the second shunt resistors 33bu, 33bw, and 33bv to the second pre-driver 11b, are formed on the control board 20. As shown in FIG. 5, at least a portion of the first shunt voltage wire 19a is disposed between the first inverter circuit 3a and the first side edge 20c, and at least a portion of the second shunt voltage wire 19b is disposed between the second inverter circuit 3b and the second side edge 20d. According to such configuration, it is possible to secure the distance between the shunt voltage wires 19a, 19b and the inverter circuits 3a, 3b. Therefore, it is possible to reduce the effect of the switching noise which is generated from the inverter circuits 3a and 3b has on the detection results of voltages of both ends of the shunt resistors 33au to 33bv.

The first driving voltage wire 18a which connects the first pre-driver 11a and the first inverter circuit 3a, and the second driving voltage wire 18b which connects the second pre-driver 11b and the second inverter circuit 3b, are formed on the control board 20. At least a portion of the first driving voltage wire 18a and at least a portion of the second driving voltage wire 18b are disposed between the first inverter circuit 3a and the second inverter circuit 3b. According to the above configuration, it is possible to secure the distance between the driving voltage wires 18a, 18b and the shunt voltage wires 19a, 19b. Therefore, it is possible to reduce the effect that the noise that is generated from the driving voltage wires 18a and 18b has on the voltages of both ends of the shunt resistors 33au to 33bv.

The same type of IC may be used as the first pre-driver 11a and the second pre-driver 11b. In such case, it is possible to reduce variance that may result from differences in performance of the ICs between the above two systems. "Two systems" here refers to a first system that includes the first pre-driver 11a, and a second system that includes the second pre-driver 11b.

The control board 20 has a power supply portion (the GND holes 22 and the power line holes 23) that supplies power from the battery 9, and the power supply portion is located on an end (near the first side edge 20c) of the control board 20. The first power line 26 which is electrically connected to the negative pole of the battery 9, and the second power line 27 which is electrically connected to the positive pole of the battery 9, are formed on the control board 20. At least portions of the first power line 26 and the second power line 27 are disposed along the end (near the first side edge 20c) of the control board 20. According to such configuration, it is possible to widen an area of the region A onto which the control circuit 5 is implemented. It is also possible to deposit the power supply portion, the first power line 26, and the second power line 27 near edges of the control board 20 other than the first side edge 20c.

According to the present embodiment, it is possible to provide the electric power steering device 100 having improved robustness against disturbances.

### Second Embodiment

Next, an electric power steering device according to a second embodiment is explained. Since the electric power steering device according to the present embodiment is fundamentally the same as the electric power steering device in the first embodiment, explanations below only center on differences therebetween.

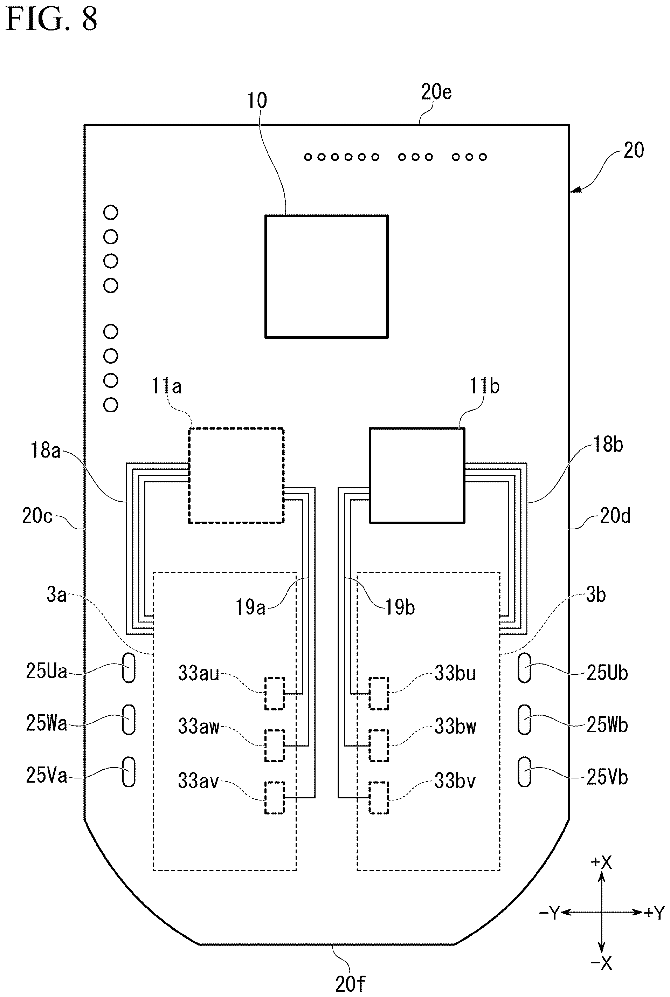

As shown in FIG. 8, in the present embodiment, the shunt resistors 33au, aw, av, bu, bw, and bv are disposed in the center of the control board 20 in the second orthogonal direction Y. The shunt voltage wires 19a and 19b are also disposed near the center of the control board 20 in the second orthogonal direction Y. Portions of the shunt voltage wires 19a and 19b are disposed between the inverter circuits 3a and 3b. The first driving voltage wire 18a is disposed between the first inverter circuit 3a and the first side edge 20c in the second orthogonal direction Y. The second driving voltage wire 18b is disposed between the second inverter circuit 3b and the second side edge 20d in the second orthogonal direction Y.

As explained above, in the present embodiment, the first inverter circuit 3a has the first shunt resistors 33au, 33aw, and 33av so as to monitor the current being supplied to the motor 4, and the second inverter circuit 3b has the second shunt resistors 33bu, 33bw, and 33bv so as to monitor the current being supplied to the motor 4. The first shunt voltage wire 19a that transmits voltages of both ends of the first shunt resistors 33au, 33aw, and 33av to the first pre-driver 11a, and the second shunt voltage wire 19b which transmits voltages of both ends of the second shunt resistors 33bu, 33bw, and 33bv to the second pre-driver 11b, are formed on the control board 20. As shown in FIG. 8, at least a portion of the first shunt voltage wire 19a and at least a portion of the second shunt voltage wire 19b is disposed between the first inverter circuit 3a and the second inverter circuit 3b.

The control board 20 has the first side edge 20c and the second side edge 20d, the first driving voltage wire 18a which connects the first pre-driver 11a and the first inverter circuit 3a, and the second driving voltage wire 18b which connects the second pre-driver 11b and the second inverter circuit 3b, formed on the control board 20. At least a portion of the first driving voltage wire 18a is disposed between the first inverter circuit 3a and the first side edge 20c, and at least a portion of the second driving voltage wire 18b is disposed between the second inverter circuit 3b and the second side edge 20d. With the above configuration, it is possible to secure the distance between the driving voltage wires 18a, 18b and the shunt voltage wires 19a, 19b. Therefore, it is possible to reduce the effect which the noise generated from the driving voltage wires 18a and 18b has on the detection results of voltages of both ends of the shunt resistors 33au to 33bv.

The scope of the present disclosure is not limited to the aforementioned embodiments, and changes and/or additions may be made so long as the technical scope of the present disclosure is not departed from.

For example, the electric control device 1 may be used for applications other than the electric power steering device 100. The aforementioned embodiments and/or variations thereof may be combined as needed.

### Reference Signs List

1... Electric Control Device, 2... Control Unit, 3a... First Inverter Circuit, 3b...Second Inverter Circuit, 4...Motor, 4b...Rotor, 9...Battery, 11a...First Pre-Driver, 11b...Second Pre-Driver, 18a...First Driving Voltage, 18b... Second Driving Voltage, 19a...First Shunt Voltage, 19b...Second Shunt Voltage, 20...Control Board, 20a... First Surface, 20b... Second Surface, 20c...First Side Edge, 20d...Second Side Edge, 26...First Power Line, 27... Second Power Line, 33au, 33av, 33aw... First Shunt Resistor, 33bu, 33bv, 33bw...Second Shunt Resistor, 100... Electric Power Steering, Ua~Wb··· Windings

## Claims

1. An electric control device comprising:
a motor having a single rotor and two pair of windings which cause the rotor to rotate by having current flow thereto; and
a control unit that is attached to the motor and that controls current being supplied to each of the pair of windings; wherein
the control unit has
a control board,
a first inverter circuit and a second inverter circuit which are able to independently supply current to each of the pair of windings,
a first pre-driver which outputs a signal for operating the first inverter circuit,
a second pre-driver which outputs a signal for operating the second inverter circuit, and
a CPU which controls the first pre-driver and the second pre-driver,
the first pre-driver is disposed on a first surface of the control board, and
the second pre-driver is disposed on the second surface of the control board.

2. The electric control device according to claim 1, wherein
a first set of wires which connect the CPU and the first pre-driver, and a second set of wires which connect the CPU and the second pre-driver are disposed so as to project in a thickness direction of the control board without intersecting one another.

3. The electric control device according to claim 1 or 2, wherein
the control board has a first side edge and the second side edge,
the first inverter circuit has a first shunt resistor to monitor the current being supplied to the motor,
the second inverter circuit has a second shunt resistor to monitor the current being supplied to the motor,
a first shunt voltage wire that transmits voltages of both ends of the first shunt resistor to the first pre-driver, and a second shunt voltage wire which transmits voltages of both ends of the second shunt resistor to the second pre-driver, are formed on the control board,
at least a portion of the first shunt voltage wire is disposed between the first inverter circuit and the first side edge, and
at least a portion of the second shunt voltage wire is disposed between the second inverter circuit and the second side edge.

4. The electric control device according to any one of claims 1 to 3, wherein
a first driving voltage wire which connects the first pre-driver and the first inverter circuit, and a second driving voltage wire which connects the second pre-driver and the second inverter circuit, are formed on the control board, and
at least a portion of the first driving voltage wire and at least a portion of the second driving voltage wire are disposed between the first inverter circuit and the second inverter circuit.

5. The electric control device according to claims 1 or 2, wherein
the first inverter circuit has the second shunt resistor so as to monitor the current being supplied to the motor, and the second inverter circuit has the second shunt resistor so as to monitor the current being supplied to the motor,
the first shunt voltage wire that transmits voltages of both ends of the first shunt resistor to the first pre-driver, and the second shunt voltage wire which transmits voltages of both ends of the second shunt resistor) to the second pre-driver, are formed on the control board, and
at least a portion of the first shunt voltage wire and at least a portion of the second shunt voltage wire is disposed between the first inverter circuit and the second inverter circuit.

6. The electric control device according to any one of claims 1, 2, or 5, wherein
the control board has the first side edge and the second side edge,
the first driving voltage wire which connects the first pre-driver and the first inverter circuit, and the second driving voltage wire which connects the second pre-driver and the second inverter circuit, formed on the control board,
at least a portion of the first driving voltage wire is disposed between the first inverter circuit and the first side edge, and
at least a portion of the second driving voltage wire is disposed between the second inverter circuit and the second side edge.

7. The electric control device according to any one of claims 1 to 6, wherein
the first pre-driver and the second pre-driver are the same type of IC.

8. The electric control device according to any one of claims 1 to 7, wherein
the control board has a power supply portion that supplies power from a battery,
the power supply portion is located on an end of the control board,
a first power line which is electrically connected to a negative pole of the battery, and a second power line which is electrically connected to a positive pole of the battery, are formed on the control board, and
at least portions of the first power line and the second power line are disposed along the end of the control board.

9. An electric power steering device comprising:
the electric control device according to any one of claims 1 to 8.
